# EUROPEAN PATENT APPLICATION

(11) **EP 4 632 999 A1**
(43) Date of publication of application: **15.10.2025**
(21) Application number: 24865911.2
(22) Date of filing: 13.09.2024
(51) Int. Cl.: H02J 7/34, H02J 7/00, B60L 58/22, B60L 58/16, H01M 10/44

(54) **BATTERY MANAGEMENT APPARATUS AND METHOD**

(30) Priority: 13.09.2023 KR 20230122033
(71) Applicant: LG Energy Solution, Ltd., Seoul 07335 (KR)
(72) Inventor: LEE, Dong-Jun, Daejeon 34122 (KR); PARK, Hyun-Woo, Daejeon 34122 (KR)
(74) Representative: Plasseraud IP
(86) International application number: PCT/KR2024/014018
(87) International publication number: WO 2025/058472

(57) **Abstract**

The present disclosure relates to a battery management apparatus, battery pack and vehicle including the same and a battery management method. A battery management apparatus according to an embodiment of the present disclosure is used to control charging of a first battery and a second battery that are electrically connectable, and includes a measurement unit configured to measure a voltage of the first battery; and a control unit configured to compare the voltage of the first battery with a preset target voltage, and charge the second battery using the first battery when the voltage of the first battery is equal to or more than the target voltage.

## Description

### TECHNICAL FIELD

The present disclosure relates to a battery management apparatus and a battery management method, and more particularly, to a battery management apparatus and a battery management method for controlling the charging of a plurality of batteries that are electrically connectable.

This application claims priority to Korean Patent Application No. 10-2023-0122033 filed on September 13, 2023 in the Republic of Korea, the disclosure of which is incorporated herein by reference.

### BACKGROUND

Recently, there has been a rapid increase in the demand for portable electronic products such as laptop computers, video cameras and mobile phones, and with the extensive development of electric vehicles, accumulators for energy storage, robots and satellites, many studies are being made on high performance batteries that may be repeatedly charged and discharged.

Currently, commercially available batteries include nickel-cadmium batteries, nickel-hydrogen batteries, nickel-zinc batteries, lithium batteries and the like, and among them, lithium batteries have little or no memory effect, and thus they are gaining more attention than nickel-based batteries for their advantages that recharging may be done whenever it is convenient, the self-discharge rate is very low and the energy density is high.

With the commercialization of electric-powered devices including electric vehicles, electric motorcycles, and electric bikes become, the demand for high-capacity and high-performance batteries is increasing. However, as the capacity of batteries increases, the time required to charge the batteries also increases. To solve this problem, there is a growing need for rapid charging of batteries. For example, to achieve rapid charging within 15 minutes, it is necessary to apply an electric current of 4C or more.

In general, when a charging current of 4C (C-rate) or more for rapid charging is applied to graphite-based batteries, there is a very high likelihood that lithium plating will occur. Here, lithium plating (Li-plating) is a phenomenon in which lithium metal is deposited on the surface of the negative electrode. Lithium plating causes side reactions with an electrolyte solution and/or changes in kinetic balance of the battery, causing battery degradation. In addition, the lithium metal deposits on the surface of the negative electrode may cause an internal short circuit in the battery, and the internal short circuit may cause ignition and explosion.

In contrast, when a charging current of 4C or more for rapid charging is applied, silicon-based batteries have a much lower likelihood of lithium plating will occur than graphite-based batteries. This is because silicon-based batteries have high energy density and no directionality, the likelihood of lithium plating will occur during rapid charging is much lower than that of graphite-based batteries.

On the other hand, because graphite-based batteries have much better life characteristics during charging and discharging than silicon-based batteries, silicon-based batteries are not used alone. For example, when graphite-based batteries and silicon-based batteries are slowly charged and discharged, graphite-based batteries degrade more slowly than silicon-based batteries.

In addition, silicon-based batteries have poor storage characteristics after charging compared to graphite-based batteries. Specifically, silicon-based batteries degrade fast when they are not used for a long term after charging. In addition, silicon-based batteries degrade fast when stored in a state close to full charge. This is due to high reactivity of silicon-based materials.

Therefore, there is a need for development of technology for enabling rapid charging of batteries and preventing the batteries from degrading fast, in view of the life characteristics by charging and discharging.

### DISCLOSURE

### Technical Problem

The present disclosure is designed to solve the above-described problem, and therefore the present disclosure is directed to providing a battery management apparatus and a battery management method for enabling rapid charging of a battery and preventing the battery from degrading fast, in view of the life characteristics by charging and discharging.

These and other objectives and advantages of the present disclosure may be understood from the following description and will become apparent from the exemplary embodiments of the present disclosure. Also, it will be easily understood that the objectives and advantages of the present disclosure may be realized by the means set forth in the appended claims and a combination thereof.

### Technical Solution

A battery management apparatus according to an aspect of the present disclosure is used to control charging of a first battery and a second battery that are electrically connectable and may include a measurement unit configured to measure a voltage of the first battery; and a control unit configured to compare the voltage of the first battery with a preset target voltage, and charge the second battery using the first battery when the voltage of the first battery is equal to or more than the target voltage.

The control unit may be configured to charge the second battery using the first battery when the voltage of the first battery is equal to or more than the target voltage and the first battery is not being charged.

The control unit may be configured to charge the second battery using the first battery when the voltage of the first battery is equal to or more than a threshold voltage and less than the target voltage, and the first battery is not used for a predetermined period of time.

The control unit may be configured to electrically insulate the second battery during the charging of the first battery.

The control unit may be configured to terminate the charging of the second battery when the voltage of the first battery reaches a preset first reference voltage during the charging of the second battery using the first battery.

The measurement unit may be further configured to measure a voltage of the second battery.

The control unit may be configured to terminate the charging of the second battery when the voltage of the second battery reaches a preset second reference voltage during the charging of the second battery using the first battery.

The first battery and the second battery may include different negative electrode active materials.

A battery pack according to another aspect of the present disclosure may include the battery management apparatus according to an aspect of the present disclosure.

A vehicle according to still another aspect of the present disclosure may include the battery management apparatus according to an aspect of the present disclosure.

A battery management method according to yet another aspect of the present disclosure relates to a battery charging method for a first battery and a second battery, and may include a measurement step of measuring a voltage of the first battery; a voltage comparison step of comparing the voltage of the first battery with a preset target voltage; and a charging step of charging the second battery using the first battery when the voltage of the first battery is equal to or more than the target voltage.

### Advantageous Effects

According to an aspect of the present disclosure, because charging and discharging is controlled in view of life characteristics of the battery related to energy storage after charging, it may be possible to prevent the battery from degrading fast.

Furthermore, according to an aspect of the present disclosure, because charging and discharging is controlled in view of the characteristics of the battery related to the charging rate, it may be possible to reduce the likelihood that lithium plating will occur in the battery.

The effects of the present disclosure are not limited to the aforementioned effects, and these and other effects will be clearly understood by those skilled in the art from the appended claims.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be constructed as being limited to the drawings.
FIG. 1 is a diagram showing a configuration of a first battery, a second battery and a battery management apparatus.
FIG. 2 is a diagram referenced in describing a situation in which a second battery is charged using a first battery.
FIG. 3 is a diagram showing a situation in which a charging current flows into a first battery.
FIG. 4 is a diagram referenced in describing a first embodiment in which the charging of a second battery is terminated based on voltage of the first battery.
FIG. 5 is a diagram referenced in describing a second embodiment in which the charging of a second battery is terminated based on voltage of the second battery.
FIGS. 6 to 8 are diagrams showing an exemplary configuration of a battery pack including a battery management apparatus according to an embodiment of the present disclosure.
FIG. 9 is a diagram schematically showing a vehicle according to another embodiment of the present disclosure.
FIG. 10 is a diagram schematically showing a battery management method according to still another embodiment of the present disclosure.

### BEST MODE

It should be understood that the terms or words used in the specification and the appended claims should not be construed as being limited to general and dictionary meanings, and rather, may be interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time the application was filed.

In describing the present disclosure, a detailed description of related known elements or functions that may make the subject matter of the present disclosure obscure or unclear, is omitted.

The terms "first", "second" and the like, are used to distinguish one element from another among various elements, but not intended to limit the elements by the terms.

Unless the context clearly indicates otherwise, the terms "comprise" and "include" when used in this specification, specify the presence of stated elements, but do not preclude the presence or addition of one or more other elements.

In addition, throughout the specification, it will be further understood that when an element is referred to as being "connected to" another element, it may be directly connected to the other element or intervening elements may be present.

Hereafter, the exemplary embodiments of the present disclosure will be described in detail with reference to the accompanying drawings.

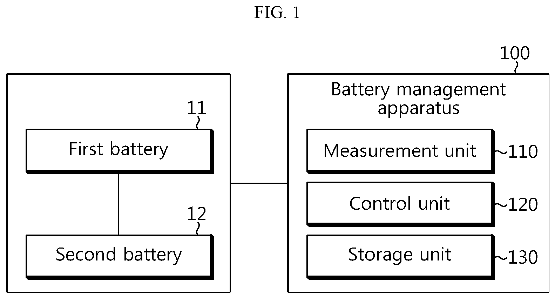

FIG. 1 is a diagram showing the configuration of a first battery 11, a second battery 12, and a battery management apparatus 100. Referring to FIG. 1, the battery management apparatus 100 may include a measurement unit 110 and a control unit 120.

The battery management apparatus 100 may be an apparatus that controls the charging of the first battery 11 and the second battery 12 that are electrically connectable.

The first battery 11 and the second battery 12 may include different negative electrode active materials. For example, the first battery 11 may be a silicon-based battery, and the second battery 12 may be a graphite-based battery. For example, the negative electrode active material of the first battery 11 may include 100% silicon, a mixture of silicon and a silicon compound (for example, SiO and/or SiC), or a mixture of silicon and graphite. For example, the negative electrode active material of the second battery 12 may include 100% graphite, a mixture of graphite and a silicon compound (for example, SiO and/or SiC), or a mixture of graphite and silicon.

The measurement unit 110 may be configured to measure the voltage of the first battery 11.

Specifically, the measurement unit 110 may be connected to a positive terminal and a negative terminal of the first battery 11. The measurement unit 110 may measure a positive voltage and a negative voltage of the first battery 11, and measure the voltage of the first battery 11 based on the measured positive voltage and the measured negative voltage. For example, the measurement unit 110 may be connected to the positive terminal and the negative terminal of the first battery 11 to measure the voltage across the first battery 11.

The measurement unit 110 may be connected to the control unit 120 to enable communication between them. That is, the measurement unit 110 may be connected to the control unit 120 to transmit or receive an electrical signal to/from the control unit 120.

The control unit 120 may be configured to compare the voltage of the first battery 11 with a preset target voltage.

Here, the target voltage is a preset voltage and refers to a minimum voltage required to charge the second battery 12 using the first battery 11. For example, the target voltage may be a preset voltage corresponding to a State of Charge (SOC) 80% or more in the first battery 11. Preferably, the target voltage may be a preset voltage corresponding to SOC 90% or more in the first battery 11.

For example, the control unit 120 may compare the voltage of the first battery 11 received from the measurement unit 110 with the target voltage.

The control unit 120 may be configured to charge the second battery 12 using the first battery 11 when the voltage of the first battery 11 is equal to or more than the target voltage.

Specifically, the control unit 120 may charge the second battery 12 using the first battery 11 by electrically connecting the first battery 11 to the second battery 12 to cause the output current from the first battery 11 to flow into the second battery 12. That is, the discharging current of the first battery 11 may be the charging current of the second battery 12.

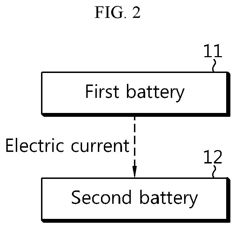

FIG. 2 is a diagram referenced in describing the situation in which the second battery 12 is charged using the first battery 11.

In the embodiment of FIG. 2, the output current from the first battery 11 flows into the second battery 12. As a result, the first battery 11 is discharged and the second battery 12 is charged.

In general, storage characteristics of silicon-based batteries after charging are inferior to storage characteristics of graphite-based batteries after charging. For example, silicon-based batteries degrade fast when stored in a state close to full charge. This is due to high reactivity of silicon-based materials. In contrast, graphite-based batteries do not degrade fast simply because they are stored in a state close to full charge.

The battery management apparatus 100 according to the present disclosure may control the charging and discharging of the battery in view of the life characteristics of the battery related to energy storage after charging. When the first battery 11 is charged first and the second battery 12 is charged using the first battery 11, it may be possible to prevent a situation in which the first battery 11 is stored in a state close to full charge. Accordingly, it may be possible to preventthe first battery 11 from degrading fast.

The control unit 120 of the battery management apparatus 100 may selectively include a processor, an application-specific integrated circuit (ASIC), another chipset, a logic circuit, a register, a communication modem or a data processing device known in the technical field to execute many different control logics performed in the present disclosure. In addition, when the control logic is implemented as software, the control unit 120 may be implemented as a set of program modules. In this instance, the program modules may be stored in a memory and executed by the control unit 120. The memory may be inside or outside the control unit 120 and be connected to the control unit 120 with a variety of well-known means.

In addition, the battery management apparatus 100 may further include a storage unit 130. The storage unit 130 may store data or programs necessary for each component of the battery management apparatus 100 to perform operations and functions, or data created in the process of performing the operations and functions. The storage unit 130 is not limited to a particular type and may include any information storage means known as being able to record, erase, update, and read data. As an example, the information storage means may include RAM, flash memory, ROM, EEPROM, or register. In addition, the storage unit 130 may store program codes defining the processes that may be performed by the control unit 120.

For example, the storage unit 130 may store voltages that may be compared with the voltage of the first battery 11. Specifically, a preset target voltage may be stored in the storage unit 130. Additionally, the control unit 120 may access the storage unit 130 to obtain information associated with the target voltage from the storage unit 130.

Specifically, the control unit 120 may be configured to charge the second battery 12 using the first battery 11, when the voltage of the first battery 11 is equal to or more than the target voltage and the charging of the first battery 11 is terminated.

In general, due to the nature of batteries, charging and discharging does not proceed at the same time. Therefore, when the charging of the first battery 11 is terminated, the control unit 120 may charge the second battery 12 using the first battery 11.

For example, when the voltage of the first battery 11 reaches a predetermined end-of-charge value, the charging of the first battery 11 may be terminated. In this case, the control unit 120 may charge the second battery 12 using the first battery 11. Here, the end-of-charge value may be a preset value that is equal to or more than the target voltage.

As another example, when the voltage of the first battery 11 reaches the target voltage, the control unit 120 may terminate the charging of the first battery 11. Additionally, the control unit 120 may charge the second battery 12 using the first battery 11.

The battery management apparatus 100 according to the present disclosure may control the charging of the first battery 11 and the second battery 12 in view of poor storage characteristics of the first battery 11after charging. Therefore, it may be possible to effectively prevent the first battery 11from degrading fast.

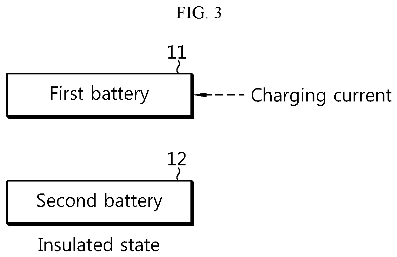

FIG. 3 is a diagram showing a situation in which the charging current flows into the first battery 11.

Referring to FIG. 3, when the charging current flows into the first battery 11, the first battery 11 may be charged.

In an embodiment, the control unit 120 may be configured to electrically insulate the second battery 12 when the first battery 11 is being charged.

Here, the electrically insulated second battery 12 may refer to the second battery 12 at no load.

Specifically, while the first battery 11 is being charged with the charging current, the corresponding charging current does not flow into the second battery 12. That is, while the first battery 11 is being charged, the second battery 12 may be no-load.

In general, when a charging current of 4C or more for rapid charging is applied, graphite-based batteries have a very high likelihood that lithium plating will occur. In contrast, when a charging current of 4C or more for rapid charging is applied, silicon-based batteries have a much lower likelihood of lithium plating will occur than graphite-based batteries. This is because silicon-based batteries have high energy density and no directionality. That is, in the case of slow charging, when silicon-based batteries and graphite-based batteries are charged at the same time, there is a low likelihood that lithium plating will occur. In contrast, in the case of rapid charging, when silicon-based batteries and graphite-based batteries are charged at the same time, graphite-based batteries have a high likelihood that lithium plating will occur.

For example, during rapid charging of the first battery 11, when the charging current flows into the second battery 12, lithium plating may occur in the second battery 12. Therefore, the control unit 120 may electrically insulate the second battery 12 during rapid charging of the first battery 11, in order to prevent lithium plating in the second battery 12.

Meanwhile, during slow charging of the first battery 11, when the charging current flows into the second battery 12, the first battery 11 and the second battery 12 may be charged at the same time. When the second battery 12 reaches a fully charged state earlier than the first battery 11, the output current from the first battery 11 does not flow into the second battery 12. That is, it is impossible to charge the second battery 12 using the first battery 11. In this case, because the voltage of the first battery 11 is maintained at or above the target voltage, the first battery 11 may degrade fast. Therefore, during slow charging of the first battery 11, the control unit 120 may electrically insulate the second battery 12, and charge the second battery 12 using the first battery 11, thereby preventing the first battery 11 from degrading fast.

During charging of the first battery 11, the control unit 120 may insulate the second battery 12 irrespective of the charging pattern (slow charging or rapid charging).

The battery management apparatus 100 according to the present disclosure may control the charging and discharging of the first battery 11 and the second battery 12 in view of poor storage characteristics of the first battery 11after charging and the likelihood that lithium plating will occur in the second battery 12.

The control unit 120 may be configured to charge the second battery 12 using the first battery 11, when the voltage of the first battery 11 is equal to or more than the threshold voltage and less than the target voltage, and the first battery 11 has not been used for a predetermined period of time,.

In general, storage characteristics of silicon-based batteries after charging are inferior to storage characteristics of graphite-based batteries after charging. For example, silicon-based batteries degrade fast when they are not used for a long term after charging. This is due to high reactivity of silicon-based materials. In contrast, graphite-based batteries do not degrade fast simply because they store energy without being used for a long term after charging.

When the voltage of the first battery 11 is more than the threshold voltage and equal to or less than the target voltage, and the first battery 11 has not been used for a predetermined period of time, the battery management apparatus 100 may charge the second battery 12 using the first battery 11, thereby preventing a situation in which the first battery 11 is not used for a long term after charging. Accordingly, it may be possible to further prevent the first battery 11from degrading fast.

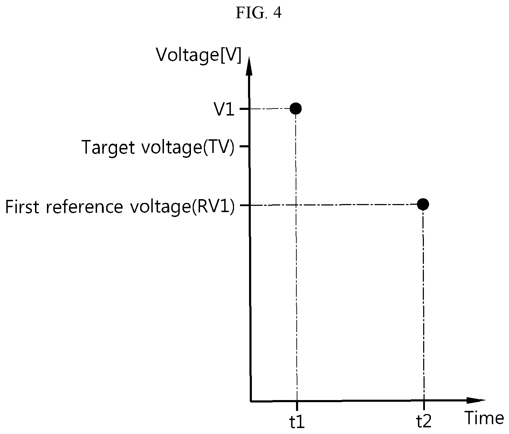

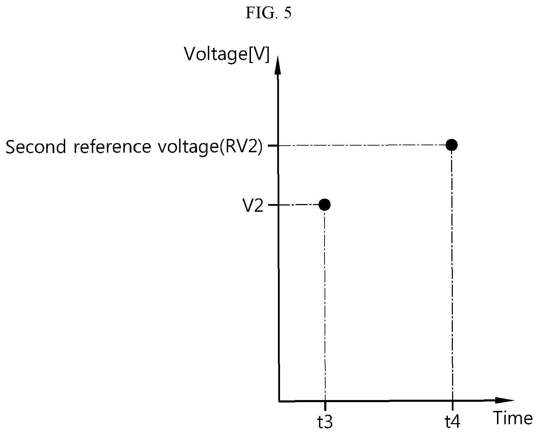

Hereinafter, the embodiment in which the control unit 120 terminates the charging of the second battery 12 will be described. Specifically, a first embodiment of terminating the charging of the second battery 12 will be described using FIG. 4, and a second embodiment of terminating the charging of the second battery 12 will be described using FIG. 5.

FIG. 4 is a diagram referenced in describing the first embodiment in which the charging of the second battery 12 is terminated based on the voltage of the first battery 11. FIG. 4 is a graph showing the voltage of the first battery 11 over time.

The control unit 120 may be configured to terminate the charging of the second battery 12 when the voltage of the first battery 11 reaches a preset first reference voltage RV1 during charging of the second battery 12 using the first battery 11.

Here, the first reference voltage RV1 may be preset to a smaller value than the target voltage TV.

Referring to FIG. 4, t1 is a start time of the charging of the second battery 12 using the first battery 11, and t2 is an end time of the charging of the second battery 12 using the first battery 11. V1 is the voltage of the first battery 11 at t1. That is, V1 is the voltage of the first battery 11 at the start time of the charging of the second battery 12 using the first battery 11 begins.

Specifically, at t1, the voltage of the first battery 11 is equal to or more than the target voltage TV. t2 is the time when the voltage of the first battery 11 reaches the first reference voltage RV1. At t2, the charging of the second battery 12 using the first battery 11 is terminated. During charging of the second battery 12 using the first battery 11, as the first battery 11 is discharged, the voltage of the first battery 11 decreases.

FIG. 5 is a diagram referenced in describing the second embodiment in which the charging of the second battery 12 is terminated based on the voltage of the second battery 12. FIG. 5 is a graph showing the voltage of the second battery 12 over time.

The measurement unit 110 may be further configured to measure the voltage of the second battery 12.

Specifically, the measurement unit 110 may be connected to a positive terminal and a negative terminal of the second battery 12. The measurement unit 110 may measure a positive voltage and a negative voltage of the second battery 12, and measure the voltage of the second battery 12 based on the measured positive voltage and the measured negative voltage. For example, the measurement unit 110 may be connected to the positive terminal and the negative terminal of the second battery 12 to measure the voltage across the second battery 12.

The control unit 120 may be configured to terminate the charging of the second battery 12 when the voltage of the second battery 12 reaches a preset second reference voltage RV2 during charging of the second battery 12 using the first battery 11.

Referring to FIG. 5, t3 is a start time of the charging of the second battery 12 using the first battery 11, and t4 is an end time of the charging of the second battery 12 using the first battery 11. V2 is the voltage of the second battery 12 at t3. That is, V2 is the voltage of the second battery 12 at the start time of the charging of the second battery 12 using the first battery 11 begins.

Specifically, t4 is the time when the voltage of the second battery 12 reaches the second reference voltage RV2. During charging of the second battery 12 using the first battery 11, as the second battery 12 is charged, the voltage of the second battery 12 increases.

The battery management apparatus 100 according to the present disclosure may be applied to a Battery Management System (BMS). That is, the BMS according to the present disclosure may include the battery management apparatus 100. In this configuration, at least some of the components of the battery management apparatus 100 may be implemented by supplementing or adding the functions of the components generally included in the BMS. For example, the measurement unit 110, the control unit 120, and the storage unit 130 of the battery management apparatus 100 may be implemented as the components of the BMS.

In addition, the battery management apparatus 100 according to the present disclosure may be equipped in a battery pack 10. That is, the battery pack 10 according to the present disclosure may include the battery management apparatus 100 and at least one battery cell. In addition, the battery pack 10 may further include electrical components (relay, fuse) and a case.

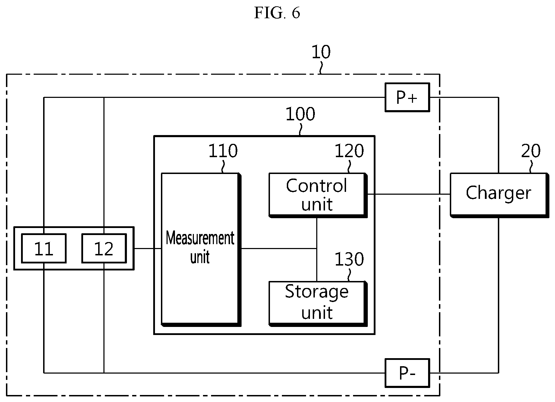

FIGS. 6 to 8 are diagrams showing the exemplary configuration of the battery pack 10 including the battery management apparatus 100 according to an embodiment of the present disclosure.

The positive terminal of each of the first battery 11 and the second battery 12 may be connected to a positive terminal (P+) of the battery pack 10, and the negative terminal of each of the first battery 11 and the second battery 12 may be connected to a negative terminal (P-) of the battery pack 10. In addition, a load or a charger 20 may be connected to the positive terminal (P+) and the negative terminal (P-) of the battery pack 10.

The control unit 120 may be connected to the charger 20 wiredly and/or wirelessly. For example, in the case of a wired connection, the control unit 120 may be connected to the charger 20 through a communication terminal (not shown). Specifically, one end of the communication terminal may be connected to the control unit 120, and the other end may be connected to the charger 20.

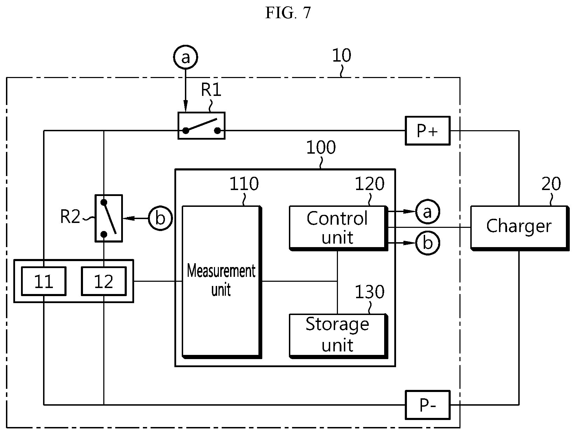

Specifically, FIG. 7 is a diagram schematically showing the first embodiment of the battery pack 10.

Referring to FIG. 7, the battery pack 10 may include the first battery 11, the second battery 12, the battery management apparatus 100, a first relay R1, and a second relay R2.

The first relay R1 may be configured to be connected between the first battery 11 and the second battery 12 and the positive terminal (P+) of the battery pack 10. For example, one end of the first relay R1 may be connected to the positive terminal of the first battery 11 and the positive terminal of the second battery 12. The other end of the first relay R1 may be connected to the positive terminal (P+) of the battery pack 10.

The control unit 120 may control the operational state of the first relay R1. The first relay R1 may be configured to establish electrical connection or disconnect the electrical connection between the first battery 11 and the second battery 12 and the positive terminal (P+) and the negative terminal (P-) of the battery pack 10 according to the controlled operational state. When the operational state of the first relay R1 is a turn-on state, the first battery 11 and the second battery 12 may be electrically connected to the charger 20. On the contrary, when the operational state of the first relay R1 is a turn-off state, the first battery 11 and the second battery 12 may be electrically disconnected from the charger 20.

The second relay R2 may be configured to be connected between the first battery 11 and the second battery 12. For example, one end of the second relay R2 may be connected between the positive terminal of the first battery 11 and one end of the first relay R1. The other end of the second relay R2 may be connected to the positive terminal of the second battery 12. Specifically, the second battery 12 may be connected to the first relay R1 through the second relay R2. That is, when the second relay R2 is turned off, the second battery 12 may be electrically disconnected from the first relay R1.

The control unit 120 may control the operational state of the second relay R2. The second relay R2 may be configured to establish electrical connection or disconnect the electrical connection between the first battery 11 and the second battery 12 according to the controlled operational state. When the operational state of the second relay R2 is a turn-on state, the second battery 12 and the first battery 11 may be electrically connected. On the contrary, when the operational state of the second relay R2 is a turn-off state, the second battery 12 and the first battery 11 may be electrically disconnected.

When charging the second battery 12 using the first battery 11, the control unit 120 may control the first relay R1 to be turned off and the second relay R2 to be turned on. Accordingly, the first battery 11 and the second battery 12 may be electrically disconnected from the charger 20. The first battery 11 and the second battery 12 may be electrically connected.

When charging the first battery 11, the control unit 120 may control the first relay R1 to be turned on. That is, the first battery 11 and the charger 20 may be electrically connected.

When electrically insulating the second battery 12 during charging of the first battery 11, the control unit 120 may control the first relay R1 to be turned on and the second relay R2 to be turned off.

When terminating the charging of the second battery 12 using the first battery 11, the control unit 120 may change the operational state of the second relay R2 from the turn-on state to the turn-off state.

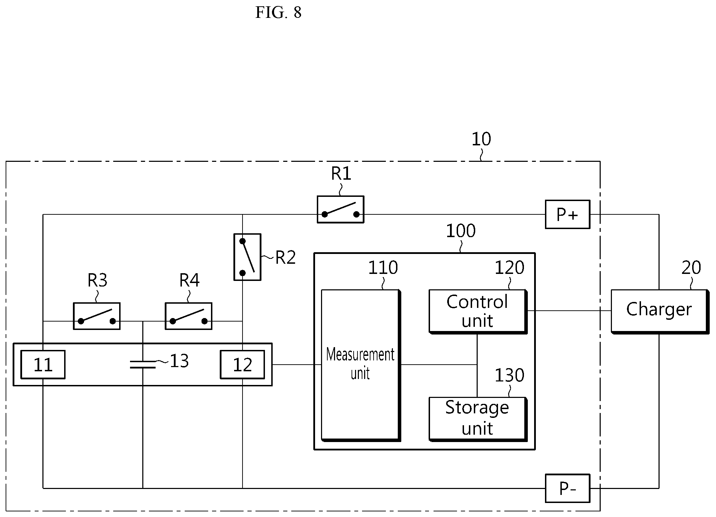

Specifically, FIG. 8 is a diagram schematically showing the second embodiment of the battery pack 10.

Referring to FIG. 8, the second embodiment is an embodiment further including a capacitor 13, a third relay R3, and a fourth relay R4, in addition to the configuration of the first embodiment. That is, the battery pack 10 may include the first battery 11, the second battery 12, the battery management apparatus 100, the first relay R1, the second relay R2, the third relay R3, the fourth relay R4, and the capacitor 13.

The battery pack 10 may include the first battery 11, the second battery 12, and the capacitor 13 connected in parallel.

For example, one end of the third relay R3 may be connected to the positive terminal of the first battery 11 and one end of the first relay R1. The other end of the third relay R3 may be connected to one end of the capacitor 13 and one end of the fourth relay R4.

One end of the fourth relay R4 may be connected to the other end of the third relay R3 and one end of the capacitor 13. The other end of the fourth relay R4 may be connected to the other end of the second relay R2 and the positive terminal of the second battery 12.

One end of the capacitor 13 may be connected to the other end of the third relay R3 and one end of the fourth relay R4. The other end of the capacitor 13may be connected to the negative terminal of the first battery 11, the negative terminal of the second battery 12, and the negative terminal (P-) of the battery pack 10.

When charging the second battery 12 using the first battery 11, the capacitor 13 may be charged by discharging the first battery 11, and the second battery 12 may be charged by discharging the capacitor 13. That is, the charging current of the capacitor 13 is the discharging current of the first battery 11, and the discharging current of the capacitor 13 is the charging current of the second battery 12.

When charging the capacitor 13 by discharging the first battery 11, the control unit 120 may control the third relay R3 to be turned on and the fourth relay R4 to be turned off. That is, the first battery 11 and the capacitor 13 may be electrically connected, and the second battery 12 and the capacitor 13 may be electrically disconnected. Meanwhile, in this case, the electrical connection or disconnection of the first battery 11 and the charger 20 and the electrical connection or disconnection of the second battery 12 and the charger 20 is irrelevant to the charging of the capacitor 13 using the first battery 11.

When charging the second battery 12 by discharging the capacitor 13, the control unit 120 may control the fourth relay R4 to be turned on and the third relay R3 to be turned off. That is, the second battery 12 and the capacitor 13may be electrically connected, and the first battery 11 and the capacitor 13 may be electrically disconnected. Meanwhile, in this case, the electrical connection or disconnection of the first battery 11 and the charger 20 and the electrical connection or disconnection of the second battery 12 and the charger 20is irrelevant to the charging of the second battery 12 using the capacitor 13.

When charging the first battery 11, the control unit 120 may control the first relay R1 to be turned on. That is, the first battery 11 and the charger 20 may be electrically connected.

When electrically insulating the second battery 12 during charging of the first battery 11, the control unit 120 may control the first relay R1 to be turned on, and the second relay R2 and the fourth relay R4 to be turned off. That is, the first battery 11 and the charger 20 may be electrically connected, and the second battery 12 may be electrically disconnected from the charger 20 and the capacitor 13.

When terminating the charging of the second battery 12 using the capacitor 13, the control unit 120 may change the operational state of the fourth relay R4 from the turn-on state to the turn-off state.

The embodiment of charging the first battery 11 and the second battery 12has been hereinabove described using FIGS. 7 and 8. However, it should be noted that various embodiments directed to substantially the same function as the battery pack 10 described above may be applied to the battery pack 10 including the battery management apparatus 100 according to the present disclosure.

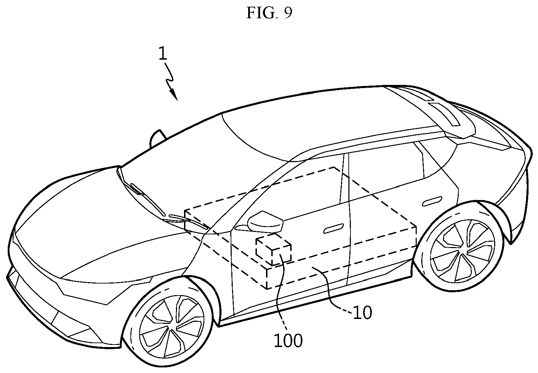

FIG. 9 is a diagram schematically showing a vehicle 1 according to another embodiment of the present disclosure.

Referring to FIG. 9, the battery pack 10 according to an embodiment of the present disclosure may be included in a vehicle 1, such as an electric vehicle (EV) or a hybrid electric vehicle (HEV). In addition, the battery pack 10 may operate the vehicle 1 by supplying power to a motor through an inverter of the vehicle 1. Here, the battery pack 10 may include the battery management apparatus 100. That is, the vehicle 1 may include the battery management apparatus 100.

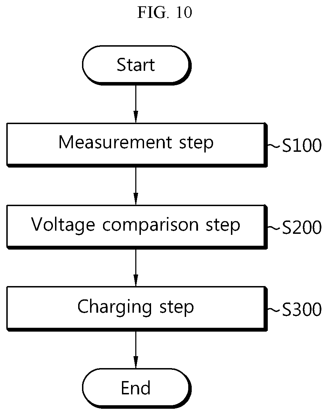

FIG. 10 is a diagram schematically showing a battery management method according to still another embodiment of the present disclosure. Referring to FIG. 10, the battery management method may include a measuring step S100, a voltage comparison step S200, and a charging step S300.

Specifically, the battery management method is a method for controlling the charging of the first battery 11 and the second battery 12 that are electrically connectable. Preferably, each step of the battery management method may be performed by the battery management apparatus 100. Hereinafter, any description shared with the foregoing description is omitted or will be briefly described.

The measurement step S100 is a step of measuring, by the measurement unit 110, the voltage of the first battery 11.

Specifically, the measurement unit 110 may be connected to the positive terminal and the negative terminal of the first battery 11 to measure the voltage across the first battery 11.

The voltage comparison step S200 is a step of comparing, by the control unit 120,the voltage of the first battery 11 with the preset target voltage.

Specifically, the control unit 120 may compare the voltage of the first battery 11 with the target voltage and determine whether the voltage of the first battery 11 is equal to or more than the target voltage.

The charging step S300 is a step of charging, by the control unit 120, the second battery 12 using the first battery 11 when the voltage of the first battery 11 is equal to or more than the target voltage.

Specifically, the control unit 120 may charge the second battery 12 using the first battery 11 by electrically connecting the first battery 11to the second battery 12to cause the output current from the first battery 11 to flow into the second battery 12.

The embodiments of the present disclosure as described herein are not embodied only through the apparatus and method, and may be implemented through programs that perform the functions corresponding to the exemplary configurations of the present disclosure or recording media having the programs recorded thereon, and such implementation may be easily achieved by those skilled in the art from the disclosure of the embodiments previously described.

Although the present disclosure has been hereinabove described with regard to a limited number of embodiments and drawings, the present disclosure is not limited thereto and it is obvious to those skilled in the art that various modifications and changes may be made thereto within the technical aspect of the present disclosure and the scope of the appended claims and their equivalents.

Additionally, as many substitutions, modifications and changes may be made to the present disclosure as described above by those skilled in the art without departing from the technical aspect of the present disclosure, the present disclosure is not limited by the above-described embodiments and the accompanying drawings, and some or all of the embodiments may be selectively combined to allow various modifications.

### [List of Reference Numerals]

1: Vehicle
10: Battery pack
11: First battery
12: Second battery
100: Battery management apparatus
110: Measurement unit
120: Control unit
130: Storage unit

## Claims

1. A battery management apparatus for controlling charging of a first battery and a second battery that are electrically connectable, the battery management apparatus comprising:
a measurement unit configured to measure a voltage of the first battery; and
a control unit configured to compare the voltage of the first battery with a preset target voltage, and charge the second battery using the first battery when the voltage of the first battery is equal to or more than the target voltage.

2. The battery management apparatus according to claim 1,
wherein the control unit is configured to:
charge the second battery using the first battery when the voltage of the first battery is equal to or more than the target voltage and the charging of the first battery is terminated.

3. The battery management apparatus according to claim 1,
wherein the control unit is configured to:
charge the second battery using the first battery when the voltage of the first battery is equal to or more than a threshold voltage and less than the target voltage, and the first battery is not used for a predetermined period of time.

4. The battery management apparatus according to claim 1,
wherein the control unit is configured to:
electrically insulate the second battery during the charging of the first battery.

5. The battery management apparatus according to claim 1,
wherein the control unit is configured to:
terminate the charging of the second battery when the voltage of the first battery reaches a preset first reference voltage during the charging of the second battery using the first battery.

6. The battery management apparatus according to claim 1,
wherein the measurement unit is further configured to:
measure a voltage of the second battery, and
wherein the control unit is configured to:
terminate the charging of the second battery when the voltage of the second battery reaches a preset second reference voltage during the charging of the second battery using the first battery.

7. The battery management apparatus according to claim 1,
wherein the first battery and the second battery include different negative electrode active materials.

8. A battery pack comprising the first battery, the second battery and the battery management apparatus according to any one of claim 1 to claim 7.

9. A vehicle comprising the battery management apparatus according to any one of claim 1 to claim 7.

10. A battery management method for controlling charging of a first battery and a second battery that are electrically connectable, the battery management method comprising:
a measurement step of measuring a voltage of the first battery;
a voltage comparison step of comparing the voltage of the first battery with a preset target voltage; and
a charging step of charging the second battery using the first battery when the voltage of the first battery is equal to or more than the target voltage.
